# EUROPEAN PATENT SPECIFICATION

(11) **EP 1 174 329 B1**
(45) Date of publication and mention of the grant of the patent: **29.10.2008**
(21) Application number: 01202491.5
(22) Date of filing: 29.06.2001
(51) Int. Cl.: B62D 9/00, B62D 12/00, B62D 5/09

(54) **Vehicle with a double steering system**
Fahrzeug mit doppeltem Lenksystem
Véhicule avec système de direction double

(30) Priority: 18.07.2000 IT BO20000436
(43) Date of publication of application: 23.01.2002
(73) Proprietor: CNH Italia S.p.A., 41100 Modena (IT)
(72) Inventor: Sedoni, Enrico, 41100 Modena (IT); Biggi, Massimo, 54033 Carrara (MS) (IT)
(74) Representative: Vandenbroucke, Alberic

(56) References cited:
- GB-A- 2 144 087
- US-A- 4 802 545
- US-A- 5 899 292

## Description

The present invention relates to a vehicle with a double steering system, and more particularly, to a rubber-tired tractor with means for steering the front wheels, and means for steering a rear portion of the tractor with respect to a front portion of the tractor, or vice versa, about an articulated joint connecting the two portions. Both steering systems are preferably, though not necessarily, controlled by means of respective pairs of hydraulic actuators.

In the agricultural machine industry, multi-steering tractors are known in which a first system for steering the front wheels is combined with a second system for steering the rear portion of the tractor with respect to the front portion, or vice versa. In the case of agricultural tractors, double steering provides for a high degree of flexibility and greatly enhances manoeuvrability with respect to the ground. In other words, "dividing" the tractor frame into two parts, so to speak, thereby creating a so-called articulated vehicle, provides for obtaining steering angles unattainable by conventional tractors, i.e. featuring a one-piece frame and steering means acting solely on the front wheels.

By way of example, a double steering system applied to a tractor is capable, when the tractor is moving forward, of turning the front wheels up to 20-25° about an axis perpendicular to the ground, and rotating the rear portion of the tractor up to 45° with respect to the front portion, or vice versa.

In as much as the hydraulic actuators for effecting the articulated steering inherently are substantially larger than those for providing front wheel steering, an operator steering the tractor experiences a severe difference in steering behaviour and response when making the transition from one steering system to the other.

It is therefore an object of the present invention to provide a vehicle comprising a hydraulic system for actuating and controlling both steering systems (front wheels and articulation) with a reduced difference in steering behaviour.

According to a main aspect of the present invention, a vehicle according to claim 1 is provided.

A non-limiting embodiment of the present invention will now be described by way of example with reference to the accompanying drawings, in which:
Figure 1 shows a plan view of a vehicle in accordance with the invention and featuring a steering system comprising an articulation, two direction wheels and respective actuators;
Figure 2 shows a side view of the Figure 1 vehicle, which in addition is characterized by a reversible operator station; in particular, Figure 2a shows the operator station facing one way, and Figure 2b the same operator station facing the opposite way;
Figure 3 shows a hydraulic circuit controlled by an electronic central control unit and set to steer the front wheels of the articulated vehicle;
Figure 4 shows the Figure 3 hydraulic circuit set to steer the articulation;
Figure 5 shows the Figure 3 and 4 hydraulic circuit in the Figure 4 configuration, whereby the hydraulic steering device is set to steer the rear portion in a first direction; and
Figure 6 shows the Figure 3 and 4 hydraulic circuit in the Figure 4 configuration, whereby the hydraulic steering device is set to steer the rear portion in a second direction opposite to the first.

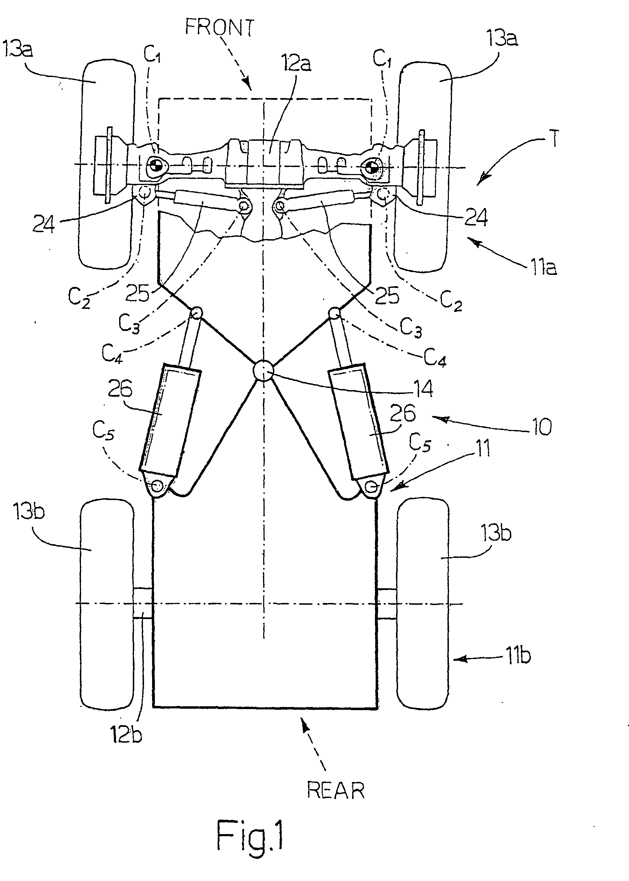

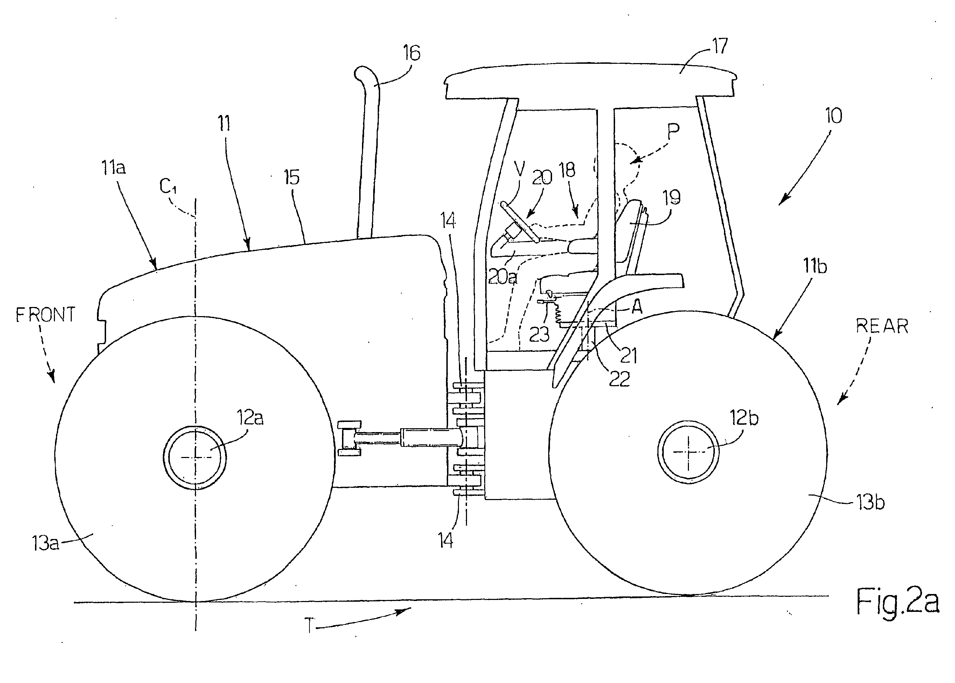

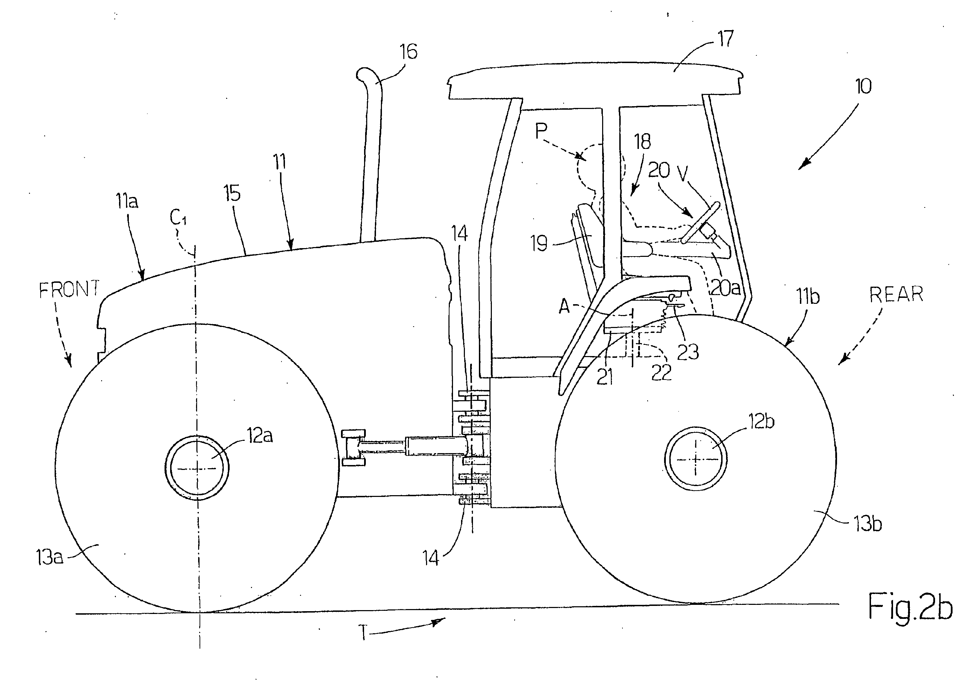

Reference number 10 in Figures 1 and 2 indicates a vehicle in accordance with the present invention and which, in particular, may be an agricultural tractor. More specifically, vehicle 10 comprises a frame 11 which can be divided into a front portion 11a and a rear portion 11b.

Front portion 11a comprises a front axle 12a supporting two front wheels 13a; and rear portion 11b comprises a rear axle 12b fitted with two rear wheels 13b. Front portion 11a of frame 11 is hinged to rear portion 11b by a known articulated joint 14.

As shown in more detail in Figure 2, vehicle 10 further comprises a hood 15 housing an internal combustion engine (not shown) of which the exhaust gasses are discharged by an exhaust pipe 16 projecting from hood 15. Frame 11 is fitted with a cab 17 housing a reversible operator station 18, which comprises a seat 19 for an operator P, and a steering assembly 20 connected integrally to seat 19 by an arm 20a and having a steering wheel V. Seat 19 rests on a plate 21, which is fitted to a pin 22 fixed to frame 11 and pivots around a vertical axis A.

In actual use, as shown in Figures 2a and 2b, to turn the reversible operator station 18 through 180°, operator P simply releases fastening means 23 and turns the operator station 18 by hand in unison with steering assembly 20, which, as stated, is connected integrally to seat 19 by arm 20a.

The operator station 18 can only be set to the two configurations shown in Figures 2a and 2b, in the latter of which, as stated, seat 19 is turned 180° with respect to the Figure 2a position. In other words, the reversible operator station 18 cannot be set to any intermediate position between those shown in Figures 2a and 2b. In the Figure 2a configuration, the operator P faces the FRONT of vehicle 10, and, in the Figure 2b configuration, operator P faces the REAR of vehicle 10.

As shown in Figures 1 and 2, each front wheel 13a is hinged with respect to front axle 12a about a respective axis C1 perpendicular to the ground T. More specifically, each front wheel 13a is connected to a respective member 24 hinged at C1 and which is rotated by a respective hydraulic actuator 25 in turn hinged at C2 to member 24 and at C3 to front portion 11a of frame 11.

As shown in Figure 1, to turn rear portion 11b of frame 11 with respect to portion 11a, or vice versa, about articulated joint 14, two further hydraulic actuators 26 are provided, each hinged at C4 to front portion 11a and at C5 to rear portion 11b.

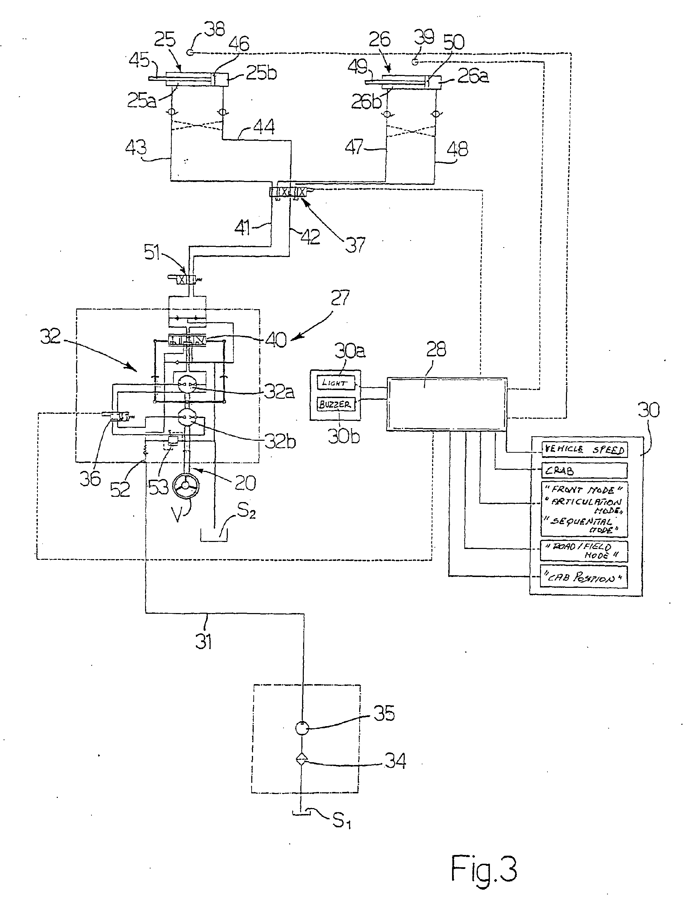

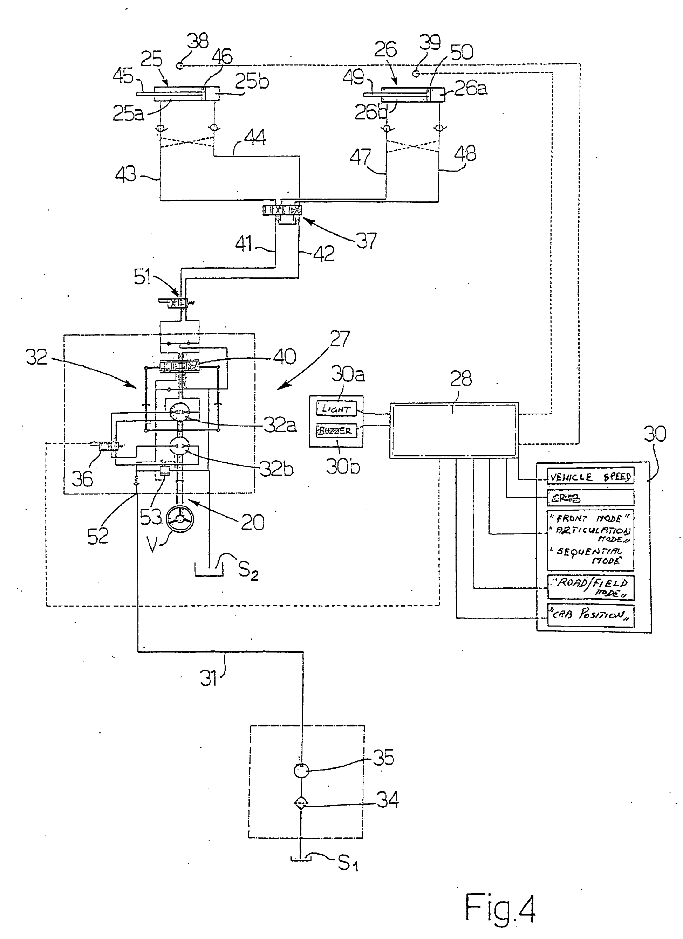

Figures 3 and 4 show a hydraulic circuit 27 for controlling actuators 25 and 26. The circuit 27 is controlled by an electronic central control unit 28 according to commands imparted by operator P by means of steering wheel V and an auxiliary push-button panel 30 for selecting various functions described in detail later on. Auxiliary push-button panel 30 is located inside cab 17 within easy reach of operator P in seat 19 in both the Figure 2a and 2b configuration of the reversible operator station 18.

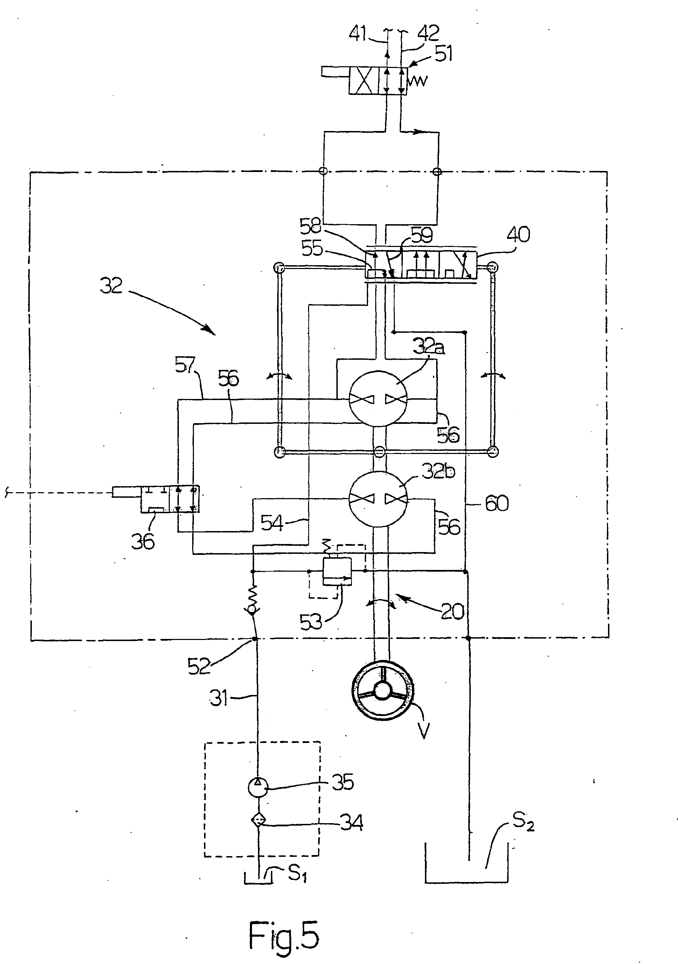

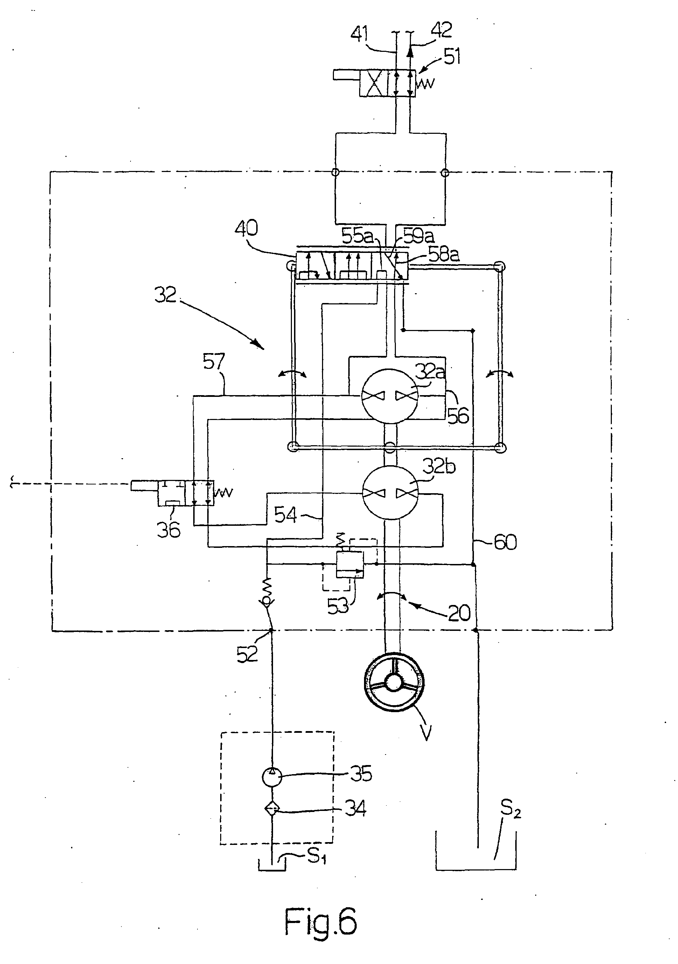

Hydraulic circuit 27 comprises a feed conduit 31 for supplying oil to a dual-volume hydraulic steering device 32. The oil is drawn in the usual way from a tank S1, is filtered by a filter 34, and is pumped by a supply pump 35 along conduit 31 to dual-volume hydraulic steering device 32. For the sake of simplicity, the conduits forming part of dual-volume hydraulic steering device 32 will be described in detail later on with reference to Figures 5 and 6.

An important point to note in the meantime is that dual-volume hydraulic steering device 32 comprises a first and a second rotor 32a, 32b connected in parallel by a volume selection valve 36 set by a command imparted by operator P via central control unit 28. As will be seen more clearly later on, by appropriately setting valve 36, it is possible to activate rotor 32a only or both rotors 32a and 32b of hydraulic steering device 32.

The change in the volume of oil delivered by the hydraulic steering device 32 in relation to the steering system used is necessary to achieve a good degree of manoeuvrability of vehicle 10 when switching from one steering system to the other. The characteristic volumes of hydraulic steering device 32 in relation to the two steering systems, in fact, normally differ fairly widely, and one rotor would not be sufficient to ensure consistent system performance when switching from one mode to the other.

The actuating system therefore ensures that, when only one rotor, e.g. 32a, of hydraulic steering device 32 is activated, pressurized oil is fed to at least one hydraulic actuator 25; and, when the second rotor 32b is also operated, i.e. is not bypassed, pressurized oil is fed by conduit 31 to at least one hydraulic actuator 26 (Figure 1) for rotating portion 11b of frame 11 with respect to portion 11a, or vice versa.

Simultaneously with the setting of valve 36 - which, as mentioned, controls the number of rotors 32a, 32b by which pressurized oil is fed to actuators 25 or 26 - central control unit 28 sets a change valve 37 for activating actuators 25 or 26, as selected by operator P. Circuit 27 controls two actuators 25 and two actuators 26 cross-connected in parallel.

When change valve 37 is set to the Figure 3 position, only actuator 25 is supplied, and no pressurized oil is supplied by hydraulic circuit 27 to actuator 26.

The respective positions of actuator 25 and actuator 26 are detected instant by instant by respective identical position sensors 38 and 39. The data detected by sensors 38 and 39 relative to the positions of actuators 25 and 26 is transmitted to central control unit 28 for processing, which, as will be seen, determines the steering mode of vehicle 10. That is, if "front mode" is selected by operator P on push-button panel 30, central control unit 28 sets volume selection valve 36 and change valve 37 to the respective positions shown in Figure 3.

Change valve 37 and volume selection valve 36 - which, as stated, bypasses second rotor 32b of hydraulic steering device 32 - are activated immediately to assume the respective positions shown in Figure 3.

In the Figure 3 configuration, a turn direction valve 40 is shown in the neutral position, i.e. with steering assembly 20 positioned in such a manner as to have no steering effect on front wheels 13a with respect to axis C1 (Figures 1 and 2).

As explained in more detail with reference to Figures 5 and 6, however, turn direction valve 40 is used to selectively divert the pressurized oil from conduit 31 to a conduit 41 or 42, by which it is fed, downstream from change valve 37, to actuator 25 or 26 depending, as already seen, on the setting of change valve 37 (Figures 3 and 4).

In the Figure 3 system configuration, the pressurized oil is diverted to a conduit 43 or 44 to supply a chamber 25a or 25b of actuator 25 respectively. In the first case, a rod 45 integral with a piston 46 hydraulically separating chambers 25a and 25b is moved to the right, with reference to Figure 3; and, in the second case, rod 45 is moved leftwards. Obviously, if actuator 25 is supplied by conduit 43, conduit 44 acts as a drain conduit to drain oil into a tank S2, and vice versa.

Similarly, in the Figure 4 system configuration, i.e. when change valve 37 is set to the Figure 4 position, the pressurized oil from conduit 41 or 42, depending on the setting of valve 40, is fed to a conduit 47 or 48 to move one way or the other a rod 49 integral with a piston 50 of hydraulic actuator 26, in the same way as for actuator 25.

In other words, by appropriately setting change valve 37 and volume selection valve 36 on auxiliary push-button panel 30 and via central control unit 28, it is possible to select a "front mode", i.e. only acting on wheels 13a by means of actuators 25, or switch to an "articulation mode" to rotate portion 11b with respect to portion 11a, or vice versa, about articulated joint 14. Dual-volume hydraulic steering device 32 can be controlled manually by operator P by means of steering assembly 20 and steering wheel V to select the rotation direction and angle respectively of front wheels 13a or portion 11b with respect to portion 11a.

Another important element of hydraulic circuit 27 is a two-way valve 51, which is activated selectively by the position of the reversible operator station 18 in cab 17. More specifically, when operator station 18 is set to the Figure 2a position, i.e. with operator P facing the FRONT of vehicle 10, valve 51 is set to the Figure 3 and 4 configuration. Conversely, when operator station 18 is turned by operator P to face the REAR of vehicle 10 (Figure 2b), valve 51 is switched to a second position (not shown) in which, so to speak, "right" and "left" are inverted. Consequently, a rightward turn of steering wheel V by operator P produces a rightward turn of vehicle 10, "right" and "left" in this case, however, being considered with respect to the REAR, i.e. with operator station 18 in the Figure 2b position.

Steering of the actuator by dual-volume hydraulic steering device 32 will now be described in detail with reference to Figures 5 and 6, both of which refer to "articulation mode" in which only actuator 26 is activated. "Front mode" steering is performed in practically the same way, only with different settings, obviously, of valve 36 and change valve 37.

In addition, as already mentioned, to the two parallel-connected rotors 32a, 32b (see below), a volume selection valve 36, and a turn direction valve 40, dual-volume hydraulic steering device 32 further comprises a non-return valve 52 and a pressure relief valve 53.

In both Figures 5 and 6, rotors 32a and 32b are assumed connected in parallel by volume selection valve 36. As stated, hydraulic steering device 32 is supplied with pressurized oil by pump 35 (Figures 3 and 4) along conduit 31, which terminates at non-return valve 52.

In the Figure 5 configuration, direction valve 40 is set to feed pressurized oil, as described in more detail later on, along conduit 41 with valve 51 set as shown in Figure 5. Since, as stated, activation of valve 36 simultaneously sets change valve 37 to the Figure 4 configuration, pressurized oil is fed to chamber 26b of actuator 26 to move rod 49 rightwards and so turn portion 11b of frame 11, e.g. clockwise, about articulated joint 14. Sensor 39 detects the turn sign and the value, which are transmitted to central control unit 28 for electronic processing.

More specifically, as shown in Figure 5, the oil, once past non-return valve 52, flows along a conduit 54 to valve 40. Valve 40 is so set in such a manner that the oil encounters and is fed back by a bypass 55 into a conduit 56 for feeding rotors 32a and 32b in parallel. As it flows out of rotors 32a and 32b, the oil is fed back along a conduit 57 through volume selection valve 36 to valve 40, where it encounters an open port 58 hydraulically connecting conduits 57 and 41 to effect the desired movement of rod 49 of actuator 26. Conduit 42 is set to drain oil into tank S2 through an open port 59 in valve 40 and along a drain conduit 60.

Similarly, when valve 40 is set to the Figure 6 position, the pressurized oil flowing along conduit 54 encounters a bypass 55a in valve 40 and is fed into conduit 57 to feed both rotors 32a, 32b. As it flows out of rotors 32a, 32b, the oil is fed back along conduit 56 to valve 40 where it encounters an open port 58a hydraulically connecting conduits 56 and 42, as shown in Figure 6. At the same time, conduit 41 is set to drain oil into tank S2 through an open port 59a and along drain conduit 60.

In the Figure 6 configuration, oil is fed along conduit 42 to chamber 26a of actuator 26 (Figure 4) to move rod 49 leftwards and so turn rear portion 11b anticlockwise with respect to front portion 11a about articulated joint 14, as opposed to clockwise, as shown in Figure 5. As before, sensor 39 detects the turn sign and the value, which are transmitted to central control unit 28 for electronic processing.

As stated, central control unit 28 may control steering consistent with the settings of operator push-button panel 30. More specifically, vehicle 10 according to the present invention provides for the following steering modes:
(a) "Front mode" only : only actuators 25 and one rotor of hydraulic steering device 32 are operated to give a maximum steering angle of 23°;
(b) "Articulation mode" only : only actuators 26 and both parallel-connected rotors 32a, 32b of hydraulic steering device 32 are operated;
(c) "Locked-wheel crab mode" : operator P selects "front mode", turns the front wheels 13a through a given angle, and then presses the "crab mode" button on panel 30 to turn rear portion 11b in "crab mode" about articulated joint 14 to manoeuvre vehicle 10 in crab fashion. In other words, a fixed front wheel angle is maintained, and steering of vehicle 10 is entrusted solely to articulated joint 14;
(d) "Locked-articulation crab mode" : operator P selects "rear mode", turns portion 11b through a given angle about articulated joint 14, and then presses the "crab mode" button on panel 30 to lock the articulation angle and only activate the steering system of front wheels 13a;
(e) "Direct sequence mode" : in this case, front wheels 13a are first turned in "front mode" up to a maximum of, e.g. 23°, whereafter, to obtain greater steering angles, "articulation mode" kicks in automatically, i.e. sequentially. In other words, when operator P turns steering wheel V, hydraulic steering device 32 supplies actuators 25 with a quantity of oil proportional to the rotation of steering wheel V to turn front axle 12a. As long as the steering angle is less than the predetermined value (e.g. 23°), steering is effected solely by turning front wheels 13a. However, on reaching the predetermined maximum steering angle (e.g. 23°), front wheels 13a are locked in position and the second hydraulic steering system kicks in to operate actuators 26 and increase the overall steering angle of vehicle 10. To realign the vehicle (in other words for straight ahead movement), the two systems are operated in reverse, i.e. articulated joint 14 is restored to the central position, whereafter actuators 25 of front axle 12a are operated to restore the front wheels 13a to the neutral position.
(f) "Reverse sequence mode" : this mode is only activated with the operator station in the Figure 2b position, in which, as stated, valve 51 is activated. "Reverse sequence" provides for first turning rear portion 11b in "rear mode" up to a maximum of e.g. 45°, and then turning front wheels 13a in "front mode" up to a maximum turn angle of e.g. 23°. Realignment again is effected in reverse order by operating vehicle 10 first in "front mode" and then in "articulation mode".

To change the steering mode of vehicle 10, operator P must first select the required mode on panel 30 and then immediately align vehicle 10 manually using steering wheel V. When the mode is selected by operator P, a flashing light 30a comes on in cab 17; and, as soon as vehicle 10 is aligned with the desired position as indicated by the steering wheel V, light 30a becomes steady and vehicle 10 is steered in the set mode. In other words, the flashing light 30a tells operator P that vehicle 10 is not yet aligned and the steering mode previous to the set mode is still effective.

Steering mode can also be changed while vehicle 10 is moving. For safety reasons, however, this is only permitted by central control unit 28 at vehicle speeds of less than 15 km/h.

If vehicle 10 is traveling at over 25 km/h with "articulation mode", "crab mode", "direct sequence mode" or "reverse sequence mode" activated, an alarm buzzer 30b alerts operator P to select a suitable on-road mode, e.g. "front mode".

One of the main advantages of the present invention lies in imparting the same degree of steering sensitivity to both the front wheel and articulation steering modes by adapting the volume of oil supplied by the hydraulic steering device 32 to the actuators 25, 26 employed.

## Claims

1. A vehicle (10) comprising:
- a first portion (11a) of a frame (11);
- a second portion (11b) of said frame (11); said first portion (11a) and said second portion (11b) of the frame (11) each having a respective pair of wheels (13a, 13b) fitted to a respective axle (12a, 12b);
- first mechanical and hydraulic means (20, 25) for turning the pair of wheels (13a) with respect to said first portion (11a) about an axis (C1) perpendicular to the ground (T); and
- second mechanical and hydraulic means (20, 26) for turning said second portion (11b) of the frame (11) with respect to said first portion (11a) of the frame (11); said first portion (11a) and said second portion (11b) being articulated about an articulated joint (14); said first means (20, 25) and said second means (20, 26) being controlled by a hydraulic circuit (27) according to commands imparted by the operator (P) via steering means (V, 30); and
**characterized in that** said hydraulic circuit (27) comprises :
- a dual-volume hydraulic steering device (32), in turn comprising at least a first rotor (32a) and at least a second rotor (32b) connectable to each other in parallel;
- connecting and disconnecting means (36) for connecting and disconnecting said at least a second rotor (32b) to and from the rest of said hydraulic circuit (27); and
- shunting means (37) activated by the operator (P) in concert with said connecting and disconnecting means (36) to selectively activate either said first mechanical and hydraulic means (20, 25) for turning the front wheels (13a), or said second mechanical and hydraulic means (20, 26) for turning said second portion (11b) with respect to said first portion (11a) about said articulated joint (14), or vice versa.

2. A vehicle (10) according to claim 1, **characterized in that** said at least a first rotor (32a) is operable to turn said front wheels (13a); and said at least a second rotor (32b), connected in parallel with said at least a first rotor (32a), turn said second portion (11b) with respect to said first portion (11a), or vice versa.

3. A vehicle (10) according to claim 1 or 2, **characterized in that** the vehicle (10) further comprises a cab (17) housing a reversible operator station (18) supporting a seat (19) and a steering assembly (20); said operator station (18) being rotatable about a pin (22) to take up a first position and a second position turned 180° with respect to each other, so that the operator (P) substantially faces a front part (FRONT) or a rear part (REAR) of the articulated vehicle (10); and **in that** said hydraulic circuit (27) comprises inverting means (51) for inverting the direction of the commands when moving from said first position to said second position of said operator station (18), or vice versa.

4. A vehicle (10) according to claim 3, **characterized in that** a reverse sequence is activated when the operator station (18) activates said inverting means (51); said reverse sequence providing for first activating the articulation in "articulation mode" to turn said rear portion (11b) with respect to said front portion (11a), or vice versa, and then turning said front wheels (13a) in "front mode"; realignment being effected by operating the vehicle (10) first in "front mode" and then in "articulation mode".

5. A vehicle (10) according to any of the preceding claims, **characterized in that**, upon the operator (P) selecting a steering mode, a flashing light (30a) comes on in the cab (17); and, as soon as the vehicle (10) is aligned, the light (30a) becomes steady and the vehicle (10) is steered in the desired mode.

6. A vehicle (10) according to any of the preceding claims, **characterized in that** said hydraulic circuit (27) is controlled by an electronic central control unit (28) for receiving and processing input data such as the speed of the vehicle (10), the position of the reversible operator station (18), the steering mode settings entered by the operator (P) on a push-button panel (30), and a number of data detected by means (38, 39) for detecting the position of said mechanical and hydraulic means (25, 26).

## Patentansprüche

1. Fahrzeug (10) mit:
- einem ersten Teil (11a) eines Rahmens (11);
- einem zweiten Teil (11b) des Rahmens (11), wobei der erste Teil (11a) und der zweite Teil (11b) des Rahmens (11) jeweils ein jeweiliges Paar von Rädern (13a, 13b) aufweisen, die an einer jeweiligen Achse (12a, 12b) angebracht sind;
- ersten mechanischen und hydraulischen Einrichtungen (20, 25) zum Schwenken des Paares von Rädern (13a) gegenüber dem ersten Teil (11a) um eine Achse (C1) senkrecht zum Boden (T); und
- zweiten mechanischen und hydraulischen Einrichtungen (20, 26) zum Schwenken des zweiten Teils (11b) des Rahmens (11) gegenüber dem ersten Teil (11a) des Rahmens (11); wobei der erste Teil (11a) und der zweite Teil (11b) gelenkig um eine Gelenkverbindung (14) herum verbunden sind; wobei die ersten Einrichtungen (20, 25) und die zweiten Einrichtungen (20, 26) durch einen Hydraulikkreis (27) entsprechend Befehlen gesteuert werden, die von dem Fahrer (P) über Lenkeinrichtungen (V, 30) erteilt werden; und
**dadurch gekennzeichnet, dass** der Hydraulikkreis (27) Folgendes umfasst:
- eine Doppelvolumen-Hydraulik-Lenkvorrichtung (32), die ihrerseits zumindest einen ersten Rotor (32a) und zumindest einen zweiten Rotor (32b) umfasst, die miteinander parallel verbindbar sind;
- Verbindungs- und Trenneinrichtungen (36) zum Verbinden und Trennen des zumindest einen zweiten Rotors (32b) mit bzw. von dem Rest des Hydraulikkreises (27); und
- Verzweigungseinrichtungen (37), die von dem Fahrer (P) gemeinsam mit den Verbindungs- und Trenneinrichtungen (36) aktiviert werden, um selektiv entweder die ersten mechanischen und hydraulischen Einrichtungen (20, 25) zum Schwenken der Vorderräder (13a) oder die zweiten mechanischen und hydraulischen Einrichtungen (20, 26) zum Schwenken des zweiten Teils (11b) gegenüber dem ersten Teil (11a) um seine Gelenkverbindung (14) zu drehen, oder umgekehrt.

2. Fahrzeug (10) nach Anspruch 1,
**dadurch gekennzeichnet, dass** der zumindest eine Rotor (32a) betreibbar ist, um die Vorderräder (13a) zu verschwenken; und dass der zumindest eine zweite Rotor (32b) in Parallelschaltung mit dem zumindest einen ersten Rotor (32a) den zweiten Teil (11b) gegenüber dem ersten Teil (11a) verschwenkt, oder umgekehrt.

3. Fahrzeug (10) nach Anspruch 1 oder 2,
**dadurch gekennzeichnet, dass** das Fahrzeug (10) weiterhin eine Kabine (17) umfasst, die eine umkehrbare Fahrer-Station (18) aufnimmt, die einen Sitz (19) und eine Lenkbaugruppe (20) trägt; wobei die Fahrer-Station (18) um einen Bolzen (22) drehbar ist, um eine erste Position und eine zweite Position einzunehmen, die um 180° bezüglich einander gedreht sind, so dass der Fahrer (P) im Wesentlichen auf einen vorderen Teil (FRONT) oder einen hinteren Teil (REAR) des Gelenkfahrzeuges (10) blickt; und dass der Hydraulikkreis (27) Invertiereinrichtungen (51) zum Invertieren der Richtung der Befehle bei einer Bewegung der Fahrer-Station (18) von der ersten Position auf die zweite Position, oder umgekehrt, umfasst.

4. Fahrzeug (10) nach Anspruch 3,
**dadurch gekennzeichnet, dass** eine Rückwärts-Sequenz aktiviert wird, wenn die Fahrer-Station (18) die Invertiereinrichtungen (51) aktiviert; wobei die Rückwärts-Sequenz zunächst das Aktivieren der Gelenkverbindung in einer "Gelenk-Betriebsart" zum Schwenken des hinteren Teils (11b) gegenüber dem vorderen Teil (11a), oder umgekehrt, und nachfolgendes Schwenken der Vorderräder (13a) in die "Frontseiten-Betriebsart" vorsieht; wobei eine Neuausrichtung durch Betätigen des Fahrzeuges (10) erst in die "Frontseiten-Betriebsart" und dann in die "Gelenk-Betriebsart" bewirkt wird.

5. Fahrzeug (10) nach einem der vorhergehenden Ansprüche,
**dadurch gekennzeichnet, dass,** wenn der Fahrer (P) eine Lenk-Betriebsart auswählt, ein Blinklicht (30a) in der Kabine (17) eingeschaltet wird, und, sobald das Fahrzeug (10) ausgerichtet ist, das Licht (30a) stetig wird und das Fahrzeug (10) in der gewünschten Betriebsart gelenkt wird.

6. Fahrzeug (10) nach einem der vorhergehenden Ansprüche,
**dadurch gekennzeichnet, dass** der Hydraulikkreis (27) durch eine elektronische Zentralsteuereinheit (28) zum Empfang und zur Verarbeitung von Eingangsdaten, wie z.B. der Geschwindigkeit des Fahrzeuges (10), der Position der umkehrbaren Fahrer-Station (18), den Lenk-Betriebsart-Einstellungen, die von dem Fahrer (P) auf einem Druckknopf-Bedienfeld (30) eingegeben werden, und einer Anzahl von Daten gesteuert wird, die durch Einrichtungen (38, 39) zur Feststellung der Position der mechanischen und hydraulischen Einrichtungen (25, 26) erfasst werden.

## Revendications

1. Véhicule (10) comprenant :
- une première partie (11a) d'un châssis (11),
- une seconde partie (11b) du dit châssis (11), ladite première partie (11a) et ladite seconde partie (11b) du châssis (11) comportant chacun une paire respective de roues (13a, 13b) montées sur un essieu respectif (12a, 12b);
- des premiers moyens mécanique et hydraulique (20, 25) pour faire braquer la paire de roues (13a) par rapport à ladite première partie (11a) autour d'un axe (C1) perpendiculaire à la terre (T), et
- des seconds moyens mécanique et hydraulique (20, 26) pour faire virer ladite seconde partie (11b) du châssis (11) par rapport à ladite première partie (11a) du châssis (11), ladite première partie (11a) et ladite seconde partie (11b) étant articulées autour d'un joint articulé (14), et les dits premiers moyens (20, 25) et les dits seconds moyens (20, 26) étant commandés par un circuit hydraulique (27) en fonction des commandes transmises par le conducteur (P) par l'intermédiaire d'organes de pilotage (V, 30), et
**caractérisé en ce que** ledit circuit hydraulique (27) comprend :
- un dispositif de direction hydraulique à deux volumes (32), comprenant successivement au moins un premier rotor (32a) et au moins un second rotor (32b) connectables l'un à l'autre en parallèle,
- des moyens de connexion et de déconnexion (36) pour connecter et déconnecter ledit au moins un second rotor (32b) sur et du reste du circuit hydraulique (27), et
- des moyens de dérivation (37) actionnés par le conducteur (P) en concert avec les dits moyens de connexion et de déconnexion (36) pour actionner sélectivement les dits premiers moyens mécanique et hydraulique (20, 25) pour braquer les roues avant (13a), ou les dits seconds moyens mécanique ou hydraulique (20, 26) pour faire virer ladite seconde partie (11b) par rapport à la première partie (11a) autour du dit joint articulé (14), ou vice versa.

2. Véhicule (10) selon la revendication 1, **caractérisé en ce que** ledit au moins un premier rotor (32a) peut être actionné pour braquer les dites roues avant (13a), et ledit au moins un second rotor (32b), connecté en parallèle avec ledit au moins un premier rotor (32a), fait virer ladite seconde partie (11b) par rapport à ladite première partie (11a), ou vice versa.

3. Véhicule (10) selon la revendication 1 ou 2, **caractérisé en ce** ledit véhicule (10) comprend en plus une cabine (17) renfermant un poste de conduite réversible (18) supportant un siège (19) et un dispositif de direction (20), ledit poste de conduite (18) étant rotatif autour d'une broche (22) pour adopter une première position et une seconde position, formant un angle de 180° l'une par rapport à l'autre, de telle sorte que le conducteur (P) soit situé sensiblement face à une partie avant (AVANT) ou une partie arrière (ARRIERE) du véhicule articulé (10), et en ce que ledit circuit hydraulique (27) comprend un élément d'inversion (51) pour inverser le sens des commandes quand ledit poste de conduite (18) est déplacé de la première position à la seconde position, ou vice versa.

4. Véhicule (10) selon la revendication 3, **caractérisé en ce qu'**une séquence inverse est activée quand le poste de conduite (18) active le dit élément d'inversion (51), ladite séquence inverse pourvoyant d'abord à un actionnement de l'articulation en "mode articulation" pour faire virer la partie arrière (11b) relativement à ladite partie avant (11a), ou vice versa, et ensuite à un braquage des dites roues avant (13a) en "mode avant", le réalignement étant effectué en actionnant le véhicule (10) d'abord en "mode avant" , puis en "mode articulation".

5. Véhicule (10) selon l'une quelconque des revendications précédentes, **caractérisé en ce**, quand le conducteur (P) sélectionne un mode de direction, une lampe clignotante (30a) s'allume dans la cabine (17), et dès que le véhicule (10) est aligné, la lampe (30a) reste allumée de manière fixe et le véhicule (10) est piloté dans le mode souhaité.

6. Véhicule (10) selon l'une quelconque des revendications précédentes, **caractérisé en ce** ledit circuit hydraulique (27) est commandé par une unité de commande centrale électronique (28) destinée à recevoir et à traiter des données d'entrée telles que la vitesse du véhicule (10), la position du poste de conduite réversible (18), les paramètres du mode de direction entrés par le conducteur (P) ou un tableau de boutons-poussoirs (30), et un certain nombre de données détectées par des moyens (38, 39) de détection de position des dits moyens mécaniques et hydrauliques (25, 26).
